# EUROPÄISCHE PATENTANMELDUNG

(11) **EP 1 331 058 A1**
(43) Veröffentlichungstag der Anmeldung: **30.07.2003**
(21) Anmeldenummer: 02025221.9
(22) Anmeldetag: 12.11.2002
(51) Int. Cl.: B23K 26/26, B23K 26/067, B23K 26/073, B23K 26/06, B23K 26/32

(54) **Verfahren und Vorrichtung zur Herstellung einer Schweiss- oder Lötnaht mit einem Laser**

(30) Priorität: 26.01.2002 DE 10203010
(71) Anmelder: ThyssenKrupp Stahl AG, 46166 Duisburg (DE)
(72) Erfinder: Litmeyer, Mike, Dipl.-Ing., 52064 Aachen (DE); Polzin, Ralf, Dipl.-Ing., 52134 Herzogenrath (DE)
(74) Vertreter: Draudt, Axel Hermann Christian, Dipl.-Ing.

(57) **Zusammenfassung**

Bei einem Verfahren zur Herstellung einer Schweiß- oder Lötnaht (10) durch Wärmeleitung mittels mindestens eines Laserstrahls (12) wird der Laserstrahl (12) derart auf das zu schweißende Metall (14) aufgestrahlt, daß, in Durchlaufrichtung (DLR) gesehen, die vorlaufende Intensität des auftreffenden Laserstrahls (12) oder eines Zusatzstrahls geringer ist als die des Schmelzbad erzeugenden Laserstrahls oder Anteils des Laserstrahls (12), zum Beispiel, der Laserstrahl ist entgegen oder auch mit der Durchlaufrichtung (DLR) unter einem spitzem Winkel (α) zur Oberflachennormalen (N) der Oberfläche die zu schweißen den Metalls (14) geneigt.

## Beschreibung

Die Erfindung betrifft ein Verfahren zur Herstellung einer Schweiß- oder Lötnaht durch Wärmeleitung mittels mindestens eines Laserstrahls, sowie eine Vorrichtung zur Durchführung des Verfahrens.

Ein derartiges Verfahren bzw. eine entsprechende Vorrichtung zur Durchführung dieses Verfahrens sind bekannt. Dieses Verfahren wird hauptsächlich zum Verbinden von Blechen, insbesondere von Blechen aus Aluminium verwandt. Einige Bleche aus Stahl, insbesondere aber Bleche aus Aluminium weisen eine organische Beschichtung auf. Diese organische Beschichtung ist eine wachsartige Schutzschicht, die auf die Bleche aufgebracht wird, um eine Korrosion der Stahlbleche bzw. eine weitere Oxidation des Aluminiums während der Lagerung der Bleche zu unterbinden. Diese Schutzschicht führt jedoch beim Laserschweißen zu Schweißnahtfehlern durch plötzliches Verdampfen und Wasserstoffaufnahme in der Schweißzone. Daher muß diese Schutzschicht vor dem Schweißen entfernt werden. Dies ist ein aufwendiger Prozeß, da zum Beispiel das AL-Blech mehrfach in einer niedrigkonzentrierten alkalischen Lösung gewaschen und dann neutralisiert werden muß. Die Kosten für die Entfernung der Schutzschicht können dabei sogar höher sein, als die Kosten für das Verschweißen der Bleche selbst. Ferner führen verbleibende Spuren der Beschichtung trotzdem noch häufig zu Schweißauswürfen.

Hinzu kommt, daß die organische Schutzschicht oder eine Beölung für das dem Schweißen eventuell nachfolgende Umformen wiederum erforderlich ist, damit es nicht zu einer Beschädigung des Bauteils und des Umformwerkzeuges durch Kaltverschweißung kommt. Bei den bekannten Verfahrensabläufen war es also erforderlich, die vor dem Schweißen entfernte Schutzschicht nach dem Schweißen wieder aufzubringen, um eine störungsfreie Umformung der geschweißten Platine bzw. Bleche sicherzustellen. Das gilt auch für beschichtete rostfreie Bleche.

Der Erfindung liegt daher die Aufgabe zugrunde, ein Verfahren sowie eine Vorrichtung der eingangs genannten Art anzugeben, die mit technisch einfachen Mitteln ein Entfernen der Schutzschicht auf zu schweißenden Blechen vermeiden und trotzdem eine nahtfehlerfreie Schweißung oder Lötung erreichen.

Diese Aufgabe wird bei dem Verfahren der eingangs genannten Art erfindungsgemäß dadurch gelöst, daß der Laserstrahl derart auf das zu schweißende Metall aufgestrahlt wird, daß in Durchlaufrichtung gesehen, die vorlaufende Intensität des auftreffenden Laserstrahls oder eines Zusatzstrahls geringer ist, als die des Schmelzbad erzeugenden Laserstrahls oder Anteils des Laserstrahls.

Dabei ist es wichtig, daß die Strahlenergie durch Wärmeleitung in die zu verschweißenden Bleche eingebracht wird. Zudem existiert eine dem Schmelzbad der Schweißstelle voreilende Wärmefront, die für ein voreilendes Verdampfen oder Cracken der organischen Schutzschicht sorgt, so daß in der Schweißzone keine organische Schutzschicht mehr vorhanden ist, die zu Schweißnahtfehlern führen könnte. Hinzu kommt, daß dadurch quasi eine Spur geschaffen wird, deren Breite größer ist als die zu erzeugende Schweiß- oder Lötnaht. Dadurch ist ein fehlerfreies Schweißen sichergestellt. Außerdem kann auf diese Weise der komplette Arbeitsgang "Entfernen der organischen Schutzschicht" eingespart werden, was zu erheblichen Kostenreduzierungen führt. Zudem muß die organische Schutzschicht für das dem Schweißen nachfolgende Umformen nicht wieder auf der ganzen Blechfläche aufgebracht werden.

Obwohl es mehrere Möglichkeiten gibt, die erfindungsgemäße Intensitätsverteilung sicherzustellen, ist es vorteilhaft, wenn der Laserstrahl entgegen oder mit der Durchlaufrichtung unter einem Winkel zur Oberflächennormalen des zu schweißenden Metalls gerichtet ist.

Dabei beträgt der Winkel bevorzugt 20° bis 30°.

Dabei ist es von Vorteil, wenn der oder die Laserstrahlen unter einem Winkel zur Oberflächennormalen ausgerichtet sind. Dadurch können auf der dem Laserstrahl entgegen gesetzten Seite des Metalls eventuell vorhandene Objekte, zum Beispiel ein weiterer Laser zum Simultanschweißen, nicht mehr beschädigt werden.

Um die Schweißgeschwindigkeit zu erhöhen, kann es sinnvoll sein, wenn der Fokus des Laserstrahls außerhalb der Oberfläche des zu schweißenden Metalls oder im Material positioniert ist.

Beim Wärmeleitungsschweißen entsteht aufgrund der vergleichsweise breiten Naht ein Wurzeldurchhang. Zur Vermeidung eines zu großen Nahtdurchhangs ist es vorteilhaft, wenn die zu schweißenden Fügepartner vertikal angeordnet sind, oder, wenn ein Kantensprung vorhanden ist, aufrecht mit horizontaler Naht mit dem dickeren Blech unten angeordnet sind.

Durch die senkrechte oder horizontaler Anordnung der Bleche bzw. des Metalls wird vermieden, daß die Gewichtskraft das dünnflüssige Schmelzbad insbesondere von Aluminium negativ beeinflußt. Also wird kein großer Wurzeldurchgang erzeugt.

Gemäß einer weiteren Ausführungsform ist es vorgesehen, daß während des Schweißvorgangs auf den Schweißbereich von einer oder von beiden Seiten Schutzgas geleitet wird.

Wenn insbesondere größere Spalte zu überbrücken sind und auch aus metallurgischen Gründen kann es vorteilhaft sein, wenn während des Schweißvorgangs Schweißzusatz zugeführt wird.

Da wärmebehandelbare Stähle, die mittels Lasern oder auch konventionellen Techniken geschweißt worden sind, im Nahtbereich aufgehärtet sein können, ist es vorteilhaft, wenn nach Fertigstellung der Schweiß-/Lötnaht diese mittels eines erneut aufgestrahlten Laserstrahls wärmebehandelt wird.

Gemäß einer weiteren Ausführungsform ist es vorgesehen, daß mindestens zwei hintereinander angeordnete Laserstrahlen für den Schweißvorgang von einer Seite auf das Metall aufgestrahlt werden. Wobei es sich bei dem vorlaufenden Laser vorzugsweise um einen Diodenlaser kleiner Leistung handeln kann.

Dadurch kann eine größere Eindringtiefe und/oder eine höhere Schweißgeschwindigkeit erzielt werden.

Es gibt mehrere Möglichkeiten der Konturgebung für einen Strahlfleck des Laserstrahls auf der Oberfläche des Metalls. Zur Erzielung des erfindungsgemäßen Gegenstands ist es dabei von Vorteil, wenn ein von dem Laserstrahl auf der Oberfläche des Metalls erzeugte Strahlfleck linienförmig und in der Durchlaufrichtung länglich ausgebildet wird.

Gemäß einer anderen Ausführungsform der Erfindung ist es vorgesehen, daß der Strahlfleck trapezförmig ist, wobei die längere Parallele quer zur Durchlaufrichtung verläuft und den Bereich geringerer Intensität begrenzt. Dies ist insbesondere dann einfach möglich, die oben angegebene Neigung des Laserstrahls verwandt wird.

Insbesondere eine Erhöhung der Schweißgeschwindigkeit ist dann möglich, wenn auf einander gegenüberliegende Werkstückseiten je ein oder mehrere Laserstrahlen aufgestrahlt werden. Dies ist dadurch möglich, daß die jeweils einander gegenüberliegenden Werkstückaußenflächen bestrahlt und die Werkstückdicke des Schweißbereichs jeweils nur anteilig aufgeschmolzen wird. Dieses Schweißverfahren eignet sich aber auch für dickere oder besonders dicke Werkstücke, die dann gegebenenfalls mit Laserstrahlen besser durchgeschweißt werden können.

Gemäß einer weiteren Ausführungsform der Erfindung ist es vorgesehen, daß die Intensitäten der Laserstrahlen so eingestellt werden, daß die einander gegenüberliegenden Nahtquerschnitte sich zu einem Nahtquerschnitt vereinigen.

Es kann weiterhin vorteilhaft sein, wenn zeitlich und räumlich versetzt erst die eine Seite und anschließend die andere Seite verschweißt werden. Damit erhält man eine erhöhte Abkühlgeschwindigkeit und erhöhte Nahthärte, vor allem an 6000er Al-Legierungen. Des weiteren führt diese Anordnung bei horizontaler Schweißnahtlage zu einer Minimierung des Wurzeldurchhangs.

Bei einem vertikal aufgespannten Metall können sowohl horizontal als auch vertikal verlaufende Schweiß- oder Lötnähte erzeugt werden. Eine besonders gute Ausnutzung der Gravitations- bzw. Gewichtskraft für eine regelmäßige Naht ist dann gegeben, wenn die Schweiß-/Lötnaht vertikal von unten nach oben gebildet wird.

Es gibt eine Vielzahl von laserstrahlenerzeugenden Lasern, wobei sich allerdings ein Diodenlaser als besonders vorteilhaft herausgestellt hat.

Aufgrund der Steuerbarkeit der Laserstrahlen ist es möglich, daß die zu verschweißenden Metalle unterschiedliche Dicken aufweisen können.

Diese Steuerbarkeit kann auch dann verwandt werden, wenn die zu verschweißenden Metalle unterschiedliche Legierungszusammensetzungen aufweisen.

Eine besonders hohe Schweißgenauigkeit und auch Reproduzierbarkeit der Schweißqualität ist dann gegeben, wenn der Schweißvorgang elektronisch gesteuert wird.

Eine Vorrichtung zur Durchführung eines oder mehrerer der vorbeschriebenen Verfahren ist dadurch gekennzeichnet, daß mindestens ein Laser so eingestellt ist, daß in Durchlaufrichtung gesehen die vorlaufende Intensität des durch den Laser erzeugten Laserstrahls geringer ist, als die des Schmelzbad erzeugenden Anteils des Laserstrahls.

Weitere Ausführungsformen für die Vorrichtung sind in den entsprechenden Unteransprüchen angegeben. Da diese angegebenen Vorrichtungen im wesentlichen sich inhaltlich an die oben beschriebenen Verfahren anlehnen, beziehen sich die dort angegebenen Vorteile auch auf die entsprechenden Vorrichtungen.

Weitere Merkmale und Vorteile der Erfindung ergeben sich unter der folgenden Beschreibung mehrerer Ausführungsbeispiele sowie aus den Zeichnungen, auf die Bezug genommen wird. Es zeigen:
- Fig.1a: eine Draufsicht bei horizontalem Nahtverlauf bzw. eine Seitenansicht bei vertikalem Nahtverlauf einer Vorrichtung zum Schweißen mit Diodenlasern;
- Fig.1b: eine Schnittansicht durch die Vorrichtung gemäß Fig.1a entlang der Linie A-A;
- Fig.2: eine Vorderansicht der Vorrichtung gem. Fig.1;
- Fig.3: eine Seitenansicht bei horizontalem Nahtverlauf bzw. eine Draufsicht bei vertikalem Nahtverlauf der Vorrichtung gem. Fig.1;
- Fig.4: eine schematische Darstellung zur Erläuterung des Einfallswinkels, der Intensitätsverteilung sowie des erzeugten Strahlflecks auf dem Werkstück.

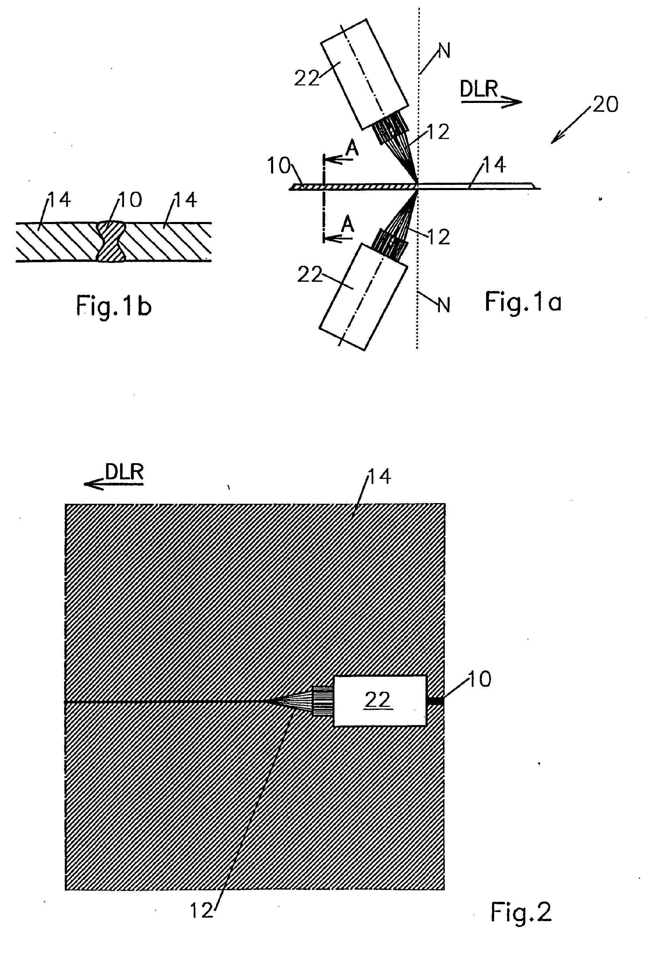

Im folgenden wird anhand der Fig.1 bis 4 eine Vorrichtung 20 zur Durchführung eines Schweißverfahrens näher beschrieben. Obwohl anhand der Fig.1 bis 3 entnehmbar ist, daß die Vorrichtung 20 zwei Laser bzw. Diodenlaser 22 aufweist, deren Laserstrahlen 12 derart auf ein Metall- insbesondere Aluminium-Blech 14 gerichtet sind, daß die Laserstrahlen 12 beim Schweißen auf zwei einander gegenüberliegenden Werkstückaußenflächen einstrahlen und die Werkstückdicke des Schweißbereichs jeweils anteilig aufschmelzen, ist die vorliegende Erfindung nicht darauf beschränkt. Selbstverständlich gelten die Ausführungen auch entsprechend für eine Vorrichtung 20, die zwei Laser bzw. Diodenlaser 22 zur Erzeugung von Laserstrahlen 12 aufweist.

Wie sich aus den Figuren ergibt, ist der mindestens eine Laser 22 so eingestellt, daß in Durchlaufrichtung DLR gesehen die vorlaufende Intensität des durch den Laser 22 erzeugten Laserstrahls 12 oder eines nicht dargestellten Zusatzstrahls geringer ist als die des Schmelzbad erzeugenden Laserstrahls 12 oder Anteils des Laserstrahls 12. Dies kann unter anderem dadurch erreicht werden, daß der Laserstrahl 12 entgegen oder auch mit der Durchlaufrichtung DLR unter einem spitzen Winkel α zur Oberflächennormalen N der Oberfläche des zu schweißenden Metalls 14 geneigt ist. Insbesondere beim Schweißen von Aluminium beträgt dieser Winkel α in etwa 20° bis 30°. Dies hat die gewünschten Auswirkungen auf die Intensitätsverteilung.

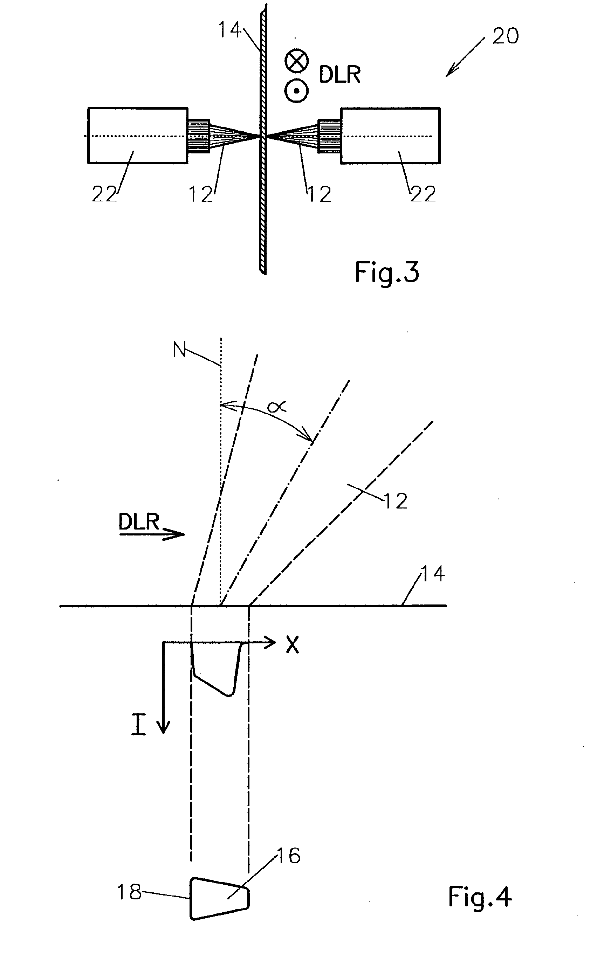

Anhand von Fig.4 wird nunmehr die Intensitätsverteilung näher beschrieben. Im oberen Bereich von Fig.4 ist schematisch das zu schweißende Metall 14 sowie der zur Oberflächennormalen N unter einem Winkel α auf dem Metall 14 auftreffende Laserstrahl 12 dargestellt. Unterhalb davon ist die Intensitätsverteilung gezeigt. Dabei ist verdeutlicht, daß die Intensitätsgröße in X-Richtung, also in Durchlaufrichtung DLR, ansteigt. Es ist aber auch eine dazu entgegengesetzte Durchlaufrichtung DLR möglich.

Mit Hilfe der Neigung entgegen der Durchlaufrichtung DLR, aber auch mit nicht näher gezeigten geeigneten Optiken, kann ein im unteren Bereich der Fig.4 gezeigter Strahlfleck 16 des Laserstrahls 12 auf dem Metall 14 erzielt bzw. erzeugt werden.

Eine vorteilhafte Realisierung der gewünschten Intensitätsverteilung ist mit einem linienförmigen und in Durchlaufrichtung DLR länglichen Strahlfleck 16 möglich.

Der gemäß Fig.4 von dem Laserstrahl 12 auf der Oberfläche des Metalls 14 erzeugte Strahlfleck 16 ist trapezförmig ausgebildet, wobei die längere Parallele 18 quer zur Durchlaufrichtung DLR verläuft und hier somit den Bereich geringerer Intensität in Durchlaufrichtung DLR begrenzt. Die Ausrichtung des Lasers 22 bzw. des auftreffenden Laserstrahls 12 erfolgt also so, daß der vorlaufende Teil des Strahlflecks 16 die geringere Intensität aufweist. Diese geringere Intensität ist insbesondere im Zusammenwirkung mit Schutzgas ausreichend, um auf den Metalloberflächen, insbesondere Aluminiumoberflächen die Verschmutzungen sowie Öl oder Trockenschmierstoff durch Verdampfen oder Cracken zu entfernen. Die nachfolgende höhere Intensität übersteigt die zum Wärmeleitungsschweißens mindestens erforderliche Energiedichte.

Der Fokus des Laserstrahls 12 kann außerhalb oder innerhalb der Oberfläche des zu schweißenden Metalls 14 positioniert werden. Dadurch kann infolge der optimierten Wärmeleitung die Vorschubgeschwindigkeit erhöht werden. Dies fördert zudem die Ausbildung einer flachen Naht, was in den Figuren allerdings nicht gezeigt ist.

Im Gegensatz zur bisher gebräuchlichen in Wannenlage horizontalen Ausrichtung der Metalle 14 bzw. Bleche, sind diese bei dem hier beschriebenen Verfahren und der entsprechenden Vorrichtung 20 vertikal ausgerichtet, und zwar mit vertikaler oder bevorzugt horizontaler Nahtrichtung.

Werden Bleche mit Dickensprung gefügt, so ist das dickere Blech bevorzugt unten angeordnet, wobei dann eine horizontale Nahtlage vorausgesetzt wird.

Die vertikale Positionierung der Metalle 14 bzw. der Bleche ermöglicht sowohl ein waagerechtes als auch senkrechtes relatives Verfahren der Diodenlaser 22. Allerdings wird bei steigender Schweißnaht eine verbesserte Spaltüberbrückung infolge der Ausnutzung der auf die Schmelze wirkenden Schwerkraft erhalten.

Ebenfalls ist es bei Verwendung zweier einander gegenüberliegend angeordneter Diodenlaser 22 möglich, daß die Intensitäten der Laserstrahlen 12 so eingestellt werden, daß die einander gegenüberliegenden Schmelzbäder des Metalls 14 sich zu einem Schmelzbad vereinigen können.

Insbesondere zur Vermeidung eines Kontaktes der geschweißten Oberfläche mit der Außenatmosphäre kann gemäß eines weiteren Ausführungsbeispiels auch noch Schutzgas auf den Schweißbereich geleitet werden.

Sollen große Spalte überbrückt werden, so ist es vorteilhaft, wenn Schweißzusatzmaterial, z.B. Draht oder Pulver, während des Schweißvorgangs zugeführt wird, was allerdings nicht in den Figuren gezeigt ist. Ferner ist es möglich, mindestens zwei Laserstrahlen 12 hintereinander für den Schweißvorgang auf das Metall aufzustrahlen. Dabei kann der vorlaufende Laserstrahl von einem Diodenlaser kleiner Leistung erzeugt werden.

Von besonderem Vorteil ist es allerdings, wenn auf einander gegenüberliegenden Werkstücksseiten je ein bzw. mehrere Laserstrahlen 12 aufgestrahlt werden.

Die Verwendung von zwei Lasern bzw. Diodenlasern 22 hat dabei zum einen den Vorteil, daß die Schweißgeschwindigkeit erhöht werden kann. Zum anderen übersteigt die Temperatur an beiden Blechoberflächen die Temperatur zum Aufschmelzen bzw. Aufbrechen der Oxidschicht. Dies gilt insbesondere für Aluminium als zu schweißendes Material. Das daraus resultierende Aufbrechen der Oxidschicht auf beiden Blechseiten verhindert die Ansammlung von flüssigem Aluminium in einer Haut aus Aluminiumoxid, die dann einen Wurzeldurchhang zur Folge hat, der vermieden werden sollte.

Ein weiterer Vorteil der Verwendung von zwei insbesondere Hochleistungsdiodenlasern 22 liegt in der Verbesserung des Aspektverhältnisses der Schweißnahtgeometrie. Dies ist ein Resultat der halbierten Einschweißtiefe im Vergleich zur Verwendung von lediglich einem Laser bzw. Hochleistungsdiodenlaser 22.

Da die beiden Diodenlaser 22 jeweils in einem Winkel entgegen der Durchlaufrichtung DLR zur Blechoberfläche ausgerichtet sind, werden gegenseitige Bestrahlung und Rückreflexe in die Diodenlaser 22 vermieden. Die Anordnung der Diodenlaser 22 unter einem Winkel α hat den oben bereits beschriebenen Strahlfleck 16 des Strahlquerschnittes zur Folge. Das geht aber auch mittels einer Anordnung im Winkel (schleppend) mit der Durchlaufrichtung DLR, wenn der Fokus im Blech bzw. Metall 14 oder tiefer liegt.

Des weiteren können die beiden Diodenlaser 22 so angeordnet sein, daß sie sich kreuzen, jedoch die Foki gegenüberliegend angeordnet sind oder ineinander fallen.

Die Führung der Diodenlaser 22 insbesondere deren Köpfe erfolgt mit Hilfe eines geeigneten Handhabungssystems, vorzugsweise einem Portal, was nicht dargestellt ist. Die Diodenlaser 22 können derart am Handhabungssystem angeordnet werden, daß ein Nachfahren mit Linienfoki entlang einer 2-D-Kontur möglich ist.

Mit dem erfindungsgemäßen Verfahren und auch der erfindungsgemäßen Vorrichtung 20 ist es auch möglich, Schweißarbeiten durchzuführen, wenn die zu verschweißenden Metalle 14 unterschiedliche Dicken und/oder Legierungszusammensetzungen aufweisen.

Da die Sprödigkeit einer Schweiß- bzw. Lötnaht 10 insbesondere für einen nachfolgenden Umformprozeß äußerst unerwünscht ist, kann die Schweiß- bzw. Lötnaht 10 noch einer Wärmebehandlung unterzogen werden. Dadurch wird die Schweißnaht 10 sozusagen spannungsfrei geglüht.

Auch dies ist mit Hilfe des oder der Diodenlaser 22 möglich.

Eine besonders exakte Nahtgeometrie und Nahtverteilung ist dann möglich, wenn die Vorrichtung 20 eine nicht dargestellte elektronische Steuerung insbesondere für die Diodenlaser 22 aufweist. Diese Steuerung wird selbstverständlich dann auch für den Wärmebehandlungsvorgang verwandt.

### Bezugszeichenliste:

- 10: Schweiß-/Lötnaht
- 12: Laserstrahl
- 14: Metall/AL-Blech
- 16: Strahlfleck
- 18: längere Parallele
- 20: Vorrichtung
- 22: Laser/Diodenlaser
- DLR: Durchlaufrichtung
- α: Winkel
- N: Oberflächennormalen

## Patentansprüche

1. Verfahren zur Herstellung einer Schweiß- oder Lötnaht (10) durch Wärmeleitung mittels mindestens eines Laserstrahls (12), **dadurch gekennzeichnet, daß** der Laserstrahl (12) derart auf das zu schweißende Metall (14) aufgestrahlt wird, daß in Durchlaufrichtung (DLR) gesehen, die vorlaufende Intensität des auftreffenden Laserstrahls (12) oder eines Zusatzstrahles geringer ist, als die des Schmelzbad erzeugenden Laserstrahls oder Anteils des Laserstrahls (12).

2. Verfahren nach Anspruch 1, **dadurch gekennzeichnet, daß** der Laserstrahl (12) entgegen oder mit der Durchlaufrichtung (DLR) unter einem Winkel (α) zur Oberflächennormalen (N) des zu schweißenden Metalls (14) gerichtet ist.

3. Verfahren nach Anspruch 2, **dadurch gekennzeichnet, daß** der Winkel (α) in etwa 20° bis 30° beträgt.

4. Verfahren nach einem der Ansprüche 1 bis 3, **dadurch gekennzeichnet, daß** der oder die Laserstrahlen (12) unter einem Winkel zur Oberflächennormalen (N) ausgerichtet sind.

5. Verfahren nach einem der Ansprüche 1 bis 4, **dadurch gekennzeichnet, daß** der Fokus des Laserstrahls (12) außerhalb der Oberfläche des zu schweißenden Metalls (14) oder im Metall (14) positioniert ist.

6. Verfahren nach einem der Ansprüche 1 bis 5, **dadurch gekennzeichnet, daß** das zu schweißende Metall (14) vertikal angeordnet ist.

7. Verfahren nach einem der Ansprüche 1 bis 6, **dadurch gekennzeichnet, daß**, wenn ein Kantensprung vorhanden ist, das zu schweißende Metall (14) vertikal mit horizontalem Nahtverlauf geschweißt wird, wobei das dickere Metall (14) dafür unten angeordnet ist.

8. Verfahren nach einem der Ansprüche 1 bis 7, **dadurch gekennzeichnet, daß** während des Schweißvorgangs von einer oder von beiden Seiten Schutzgas auf den Schweißbereich geleitet wird.

9. Verfahren nach einem der Ansprüche 1 bis 8, **dadurch gekennzeichnet, daß** während des Schweißvorgangs Schweißzusatz zugeführt wird.

10. Verfahren nach einem der Ansprüche 1 bis 9, **dadurch gekennzeichnet, daß** nach Fertigstellung der Schweiß/Lötnaht (10) diese mittels eines erneut aufgestrahlten Laserstrahls (12) wärmebehandelt wird.

11. Verfahren nach einem der Ansprüche 1 bis 10, **dadurch gekennzeichnet, daß** mindestens zwei hintereinander angeordnete Laserstrahlen (12) für den Schweißvorgang von einer Seite auf das Metall (14) aufgestrahlt werden.

12. Verfahren nach Anspruch 11, **dadurch gekennzeichnet, daß** der vorlaufende Laserstrahl von einem Diodenlaser kleiner Leistung erzeugt werden kann.

13. Verfahren nach einem der Ansprüche 1 bis 12, **dadurch gekennzeichnet, daß** ein von dem Laserstrahl (12) auf der Oberfläche des Metalls (14) erzeugter Strahlfleck (16) linienförmig und in der Durchlaufrichtung (DLR) länglich ausgebildet wird.

14. Verfahren nach Anspruch 13, **dadurch gekennzeichnet, daß** der Strahlfleck (16) trapezförmig ist, wobei die längere Parallele (18) quer zur Durchlaufrichtung (DLR) verläuft und den Bereich geringerer Intensität begrenzt.

15. Verfahren nach einem der Ansprüche 1 bis 14, **dadurch gekennzeichnet, daß** auf einander gegenüberliegenden Werkstückseiten je ein oder mehrere Laserstrahlen (12) aufgestrahlt werden.

16. Verfahren nach Anspruch 14 oder 15, **dadurch gekennzeichnet, daß** die Intensitäten der Laserstrahlen (12) so eingestellt werden, daß die einander gegenüberliegenden Nahtquerschnitte sich zu einem Nahtquerschnitt vereinigen.

17. Verfahren nach einem der Ansprüche 1 bis 16, **dadurch gekennzeichnet, daß** zeitlich und räumlich versetzt erst die eine Seite und anschließend die andere Seite verschweißt werden.

18. Verfahren nach einem der Ansprüche 6 bis 15, **dadurch gekennzeichnet, daß** die Schweiß-/Lötnaht (10) vertikal von unten nach oben gebildet wird.

19. Verfahren nach einem der Ansprüche 1 bis 18, **dadurch gekennzeichnet, daß** jeder Laserstrahl (12) von einem Diodenlaser (22) erzeugt wird.

20. Verfahren nach einem der Ansprüche 1 bis 19, **dadurch gekennzeichnet, daß** die zu verschweißenden Metalle (14) unterschiedliche Dicken aufweisen.

21. Verfahren nach einem der Ansprüche 1 bis 20, **dadurch gekennzeichnet, daß** die zu verschweißenden Metalle (14) unterschiedliche Legierungszusammensetzungen aufweisen.

22. Verfahren nach einem der Ansprüche 1 bis 21, **dadurch gekennzeichnet, daß** der Schweißvorgang elektronisch gesteuert wird.

23. Vorrichtung (20) zur Durchführung des Verfahrens nach einem oder mehreren der Ansprüche 1 bis 22, **dadurch gekennzeichnet, daß** mindestens ein Laser (22) so eingestellt ist, daß, in Durchlaufrichtung (DLR) gesehen, die vorlaufende Intensität des durch den Laser (22) erzeugten Laserstrahls (12) oder eines Zusatzstrahls geringer ist, als die des Schmelzbad erzeugenden Laserstrahls (12) oder Anteils des Laserstrahls (12).

24. Vorrichtung nach Anspruch 23, **dadurch gekennzeichnet, daß** der Laser (22) entgegen oder mit der Durchlaufrichtung (DLR) unter einem spitzen Winkel (α) zur Oberflächennormalen (N) des zu verschweißenden Materials (14) geneigt ist.

25. Vorrichtung nach Anspruch 24, **dadurch gekennzeichnet, daß** der Winkel (α) in etwa 20° bis 30° beträgt.

26. Vorrichtung nach Anspruch 23, **dadurch gekennzeichnet, daß** der Laser (22) und somit der erzeugbare Laserstrahl (12) unter einem Winkel zur Oberflächennormalen (N) ausrichtbar sind.

27. Vorrichtung nach einem der Ansprüche 20 bis 25, **dadurch gekennzeichnet, daß** eine Einrichtung zur Fokussierung des Laserstrahls (12) derart ausgelegt ist, daß der Fokus des Laserstrahls (12) außerhalb der Oberfläche des zu schweißenden Metalls (14) positionierbar ist.

28. Vorrichtung nach einem der Ansprüche 20 bis 26, **gekennzeichnet durch** eine Aufspanneinrichtung, die das zu schweißende Metall (14) vertikal ausgerichtet fixiert.

29. Vorrichtung nach einem der Ansprüche 23 bis 27, **dadurch gekennzeichnet, daß**, wenn ein Kantenspruch vorhanden ist, das zu schweißende Metall (14) vertikal mit horizontalem Nahtverlauf verschweißbar ist, wobei das dickere Metall (14) dabei unten angeordnet ist.

30. Vorrichtung nach einem der Ansprüche 23 bis 28, **dadurch gekennzeichnet, daß** während des Schweißvorgangs auf den Schweißbereich von einer oder von beiden Seiten Schutzgas zuleitbar ist.

31. Vorrichtung nach einem der Ansprüche 23 bis 30, **dadurch gekennzeichnet, daß** während des Schweißvorgangs Schweißzusatz zuführbar ist.

32. Vorrichtung nach einem der Ansprüche 23 bis 31, **dadurch gekennzeichnet, daß** die Intensität des Laserstrahls (12) so einstellbar ist, daß nach Fertigstellung der Schweiß- oder Lötnaht (10) diese mittels eines erneut aufstrahlbaren Laserstrahls (12) wärmebehandelt werden kann.

33. Vorrichtung nach einem der Ansprüche 23 bis 32, **dadurch gekennzeichnet, daß** mindestens zwei Laser (22) auf einer Seite des Metalls (14) hintereinander angeordnet sind.

34. Vorrichtung nach Anspruch 33, **dadurch gekennzeichnet, daß** der vorlaufende Laserstrahl (12) von einem Diodenlaser kleiner Leistung erzeugbar ist.

35. Vorrichtung nach einem der Ansprüche 23 bis 34, **gekennzeichnet durch** eine optische Einrichtung zur Einstellung bzw. Beeinflussung des Laserstrahls (12) derart, daß der von dem Laserstrahl (12) auf der Oberfläche des Metalls (14) erzeugte Strahlfleck (16) linienförmig und in der Durchlaufrichtung (DLR) länglich ausgebildet ist.

36. Vorrichtung nach Anspruch 35, **dadurch gekennzeichnet, daß** der von dem Laserstrahl (12) erzeugbare Strahlfleck (16) trapezförmig ist, wobei die längere Parallele (18) quer zur Durchlaufrichtung (DLR) verläuft und den Bereich geringerer Intensität begrenzt.

37. Vorrichtung nach einem der Ansprüche 23 bis 36, **dadurch gekennzeichnet, daß** zwei oder mehrere jeweils paarweise den einander gegenüberliegenden Werkstückaußenflächen benachbarte Laser (22) vorhanden sind.

38. Vorrichtung nach Anspruch 37, **dadurch gekennzeichnet, daß** die Intensität des Laserstrahls (12) mittels einer Einrichtung derart einstellbar ist, daß die Nahtquerschnitte des Metalls (14) sich zu einem Nahtquerschnitt vereinigen.

39. Vorrichtung nach einem der Ansprüche 23 bis 38, **dadurch gekennzeichnet, daß** eine Steuereinrichtung vorhanden ist, die den Schweißvorgang derart steuert, daß zeitlich und räumlich versetzt erst die eine Seite und anschließend die andere Seite verschweißt wird.

40. Vorrichtung nach einem der Ansprüche 28 bis 39, **dadurch gekennzeichnet, daß** der oder die Laserstrahlen (12) so steuerbar sind, daß die Schweiß-/Lötnaht (10) vertikal von unten nach oben erzeugbar ist.

41. Vorrichtung nach einem der Ansprüche 23 bis 40, **dadurch gekennzeichnet, daß** der Laser ein Diodenlaser (22) ist.

42. Vorrichtung nach einem der Ansprüche 23 bis 41, **gekennzeichnet durch** eine Steuereinheit zur elektronischen Steuerung des Schweißvorgangs.
